# EUROPÄISCHE PATENTANMELDUNG

(11) **EP 1 156 460 A1**
(43) Veröffentlichungstag der Anmeldung: **21.11.2001**
(21) Anmeldenummer: 01110843.8
(22) Anmeldetag: 04.05.2001
(51) Int. Cl.: G07F 7/02, G07F 19/00, H04M 17/00

(54) **Verfahren und Vorrichtung zur Abwicklung von vorausbezahlbaren geschäftlichen Transaktionen oder Dienstleistungen**

(30) Priorität: 05.05.2000 DE 10021673
(71) Anmelder: Binder, Berthold, 72406 Bisingen-Zimmern (DE); Schneider, Wolfgang, 88662 Überlingen (DE)
(72) Erfinder: Binder, Berthold, 72406 Bisingen-Zimmern (DE); Schneider, Wolfgang, 88662 Überlingen (DE)
(74) Vertreter: Otte, Peter, Dipl.-Ing.

(57) **Zusammenfassung**

Ein Automat (30) zur Ausgabe von Guthabenkarten für vorausbezahlbare geschäftliche Transaktionen oder Dienstleistungen ist über Telekommunikationsleitungen (31, 33, 35) mit einem Dienstanbieter (32) und mit mehreren Netzanbietern (34, 36, ...) verbunden. Ein GSM-Modul (37) dient zum Aufbau und Abbau von Telekommunikationsverbindungen über die Leitungen (31, 33, 35, usw.). Ein Eingabemodul (38) dient zur benutzerseitigen Eingabe eines gewünschten Guthabenbetrags und eines bestimmten Netzbetreibers. Zur Entrichtung des dem jeweiligen Guthaben entsprechenden Geldbetrages ist ein Zahlungsmodul (39) vorgesehen. In dem Automaten (30) zur Verfügung stehende Guthaben sind zusammen mit entsprechenden Zugangsberechtigungen in einem Speicher (40) zwischengespeichert. Der Speicher (40) und sämtliche übrigen Funktionskomponenten des Automaten (30) werden von einem Prozessor (41) angesteuert. Der Prozessor (41) steuert insbesondere eine Druckeinheit (42) an, die ein seitens eines Benutzers etwa angefordertes Guthaben bzw. dessen Zugangsberechtigung auf einer Guthabenkarte oder bevorzugt auf einen Belegzettel aufdruckt, der dann an einem Belegausgabemodul (43) an den Benutzer ausgebenen wird.

Die beschriebene Vorrichtung lässt sich ebenso als rein elektronische Dienstleistung, beispielsweise im Internet, realisieren.

## Beschreibung

### Hintergrund der Erfindung

Die vorliegende Erfindung betrifft ein Verfahren und eine Vorrichtung zur Handhabung von vorausbezahlbaren geschäftlichen Transaktionen oder Dienstleistungen, insbesondere von Telekommunikationsdiensten, bei dem Kosten oder Gebühren durch einen Dienstanbieter im Voraus erhoben werden und ein Benutzer gegen Entrichtung der Kosten bzw. Gebühren eine Autorisierung in Form einer PIN-Nummer erhält, die den Benutzer berechtigt, die im Voraus entrichteten Transaktionen oder Dienstleistungen auszuführen bzw. abzuverlangen.

Im Bereich der mobilen Telekommunikation setzen sich bei den meisten Netzbetreibern zunehmend sogenannte "Prepaid"-Karten durch. Es handelt sich dabei um Plastikkarten mit einer aufgedruckten und mit einer Sichtschutzschicht versehenen Zugangsberechtigungs- oder Autorisierungsgröße (im Folgenden kurz "Zugangsberechtigung", beispielsweise ein PIN (Personal Identification Number) und/oder ein Codewort und/oder eine optische und/oder akustische Identifizierung). Die Zugangsberechtigung kann dabei durch Abreiben bzw. Abrubbeln der Schutzschicht für den Benutzer sichtbar gemacht werden. Der Benutzer setzt sich dann beispielsweise telefonisch mit dem jeweiligen Netzbetreiber in Verbindung, der unter Nennung oder anderer Mitteilung oder Übermittlung dieser Zugangsberechtigung durch den Benutzer ein Gebührenkonto freischaltet. Die Höhe des erhobenen Kontos hängt von der jeweiligen Karte mit der aufgedruckten Zugangsberechtigung ab und kann z.B. 25 oder 50 DM betragen. Mittels dieser Prepaid-Karten können demnach Telefongebühren, Dienstleistungsgebühren oder dergleichen bereits im Voraus erhoben werden.

Ein Beispiel für eine solche Prepaid-Karte ist die von der deutschen Firma T-Mobil GmbH seit einiger Zeit vertriebene "D1 X-TRA" (eingetragene Marke) Karte. Die genannten Prepaid-Karten setzen sich ebenfalls zunehmend im Bereich der Festnetztelefonie und im Internet als Zahlungsmittel bei geschäftlichen Transaktionen jeglicher Art durch.

Ein Nachteil dieser Prepaid-Karten liegt darin, dass die Versorgung eines Benutzers, z.B. eines Besitzers eines Mobiltelefons oder eines Benutzers einer ähnlichen Dienstleistung im Internet oder eines Festnetztelefondienstes wie die sogenannten "Call-Back"-Karten, mit solchen Gebühren-/Cash-Karten sowohl für die Netzbetreiber als auch die Distributoren und den entsprechenden Handel einen enormen administrativen und logistischen Aufwand bedeutet. Zudem besteht ein erhöhtes Risiko bei der Lagerhaltung und beim Versand solcher Karten, da diese Karten "bares Geld" darstellen und, in falsche Hände geraten, zu einem beträchtlichen finanziellen Schaden der Netzbetreiber oder der Distributoren und/oder des Handels führen können.

Gleichzeitig stehen die Wirtschaftlichkeit und Rentabilität in keinem Verhältnis zum genannten Aufwand und zu den genannten Risiken. So müssen spezielle Ausweise, meist Kunststoffkarten, mit jeweiligen Zugangsberechtigungen gedruckt und verschickt werden. Auch werden die Karten nach dem Bedrucken meist versiegelt, um die Karten für Dritte unlesbar zu machen. Die Distribution der Karten an unterschiedlichen Verkaufsstellen ist zudem aufgrund der relativ geringen Geldbeträge im Bereich unter 100 DM aufwendiger und kostspieliger als der einzelne Nutzen oder Ertrag aus jeweils einer dieser Karten.

Nach erfolgter Registrierung der Zugangsberechtigung beim jeweiligen Netzanbieter ist die Kunststoffkarte dann bereits überflüssig und muss umwelttechnisch entsorgt werden. Die Verwendung der genannten Plastikkarten als Einwegartikel, der lediglich dazu dient, zu einem vorgegeben Gebührenkonto eine Zugangsberechtigung bereitzustellen, damit der Benutzer das Konto unter Nennung der Zugangsberechtigung freischalten lassen kann, stellt daher ein erhebliches umwelttechnisches Problem dar.

Aus den genannten Gründen besteht in dem genannten Marktsegment ein großer Bedarf, gegenüber den bekannten Lösungen verbesserte Verfahren und Vorrichtungen bereitzustellen.

### Zusammenfassung der Erfindung

Aufgabe der vorliegenden Erfindung ist es daher, ein eingangs genanntes Verfahren und eine Vorrichtung anzugeben, die eine vereinfachte Handhabung von vorausbezahlbaren geschäftlichen Transaktionen oder Dienstleistungen, insbesondere beim Erneuern der Gebührenguthaben, ermöglichen.

Die Aufgabe wird gelöst durch die Merkmale der unabhängigen Ansprüche. Vorteilhafte Weiterbildungen sind Gegenstand der Unteransprüche.

Die Besonderheit des erfindungsgemäß vorgeschlagenen Verfahrens liegt darin, dass der wenigstens eine Dienstanbieter die Guthaben und die Zugangsberechtigungen elektronisch speichert. Der Benutzer fordert ein Guthaben mit einem bestimmten Geldwert von dem wenigstens einen Dienstanbieter elektronisch an und entrichtet elektronisch und/oder über einen Münz- und/oder Banknotenautomaten und/oder über einen Kredit- und/oder Geldkartenautomaten den Geldwert des Guthabens, ggf. über einen unabhängigen Zahlungsdienst, an den wenigstens einen Dienstanbieter. Der wenigstens eine Dienstanbieter übermittelt daraufhin elektronisch oder gegebenenfalls über einen gedruckten Beleg die zu dem angeforderten Guthaben zugehörige Zugangsberechtigung an den Benutzer, woraufhin der Benutzer für das angeforderte Guthaben anhand der übermittelten Zugangsberechtigung bei dem wenigstens einen Dienstanbieter eine Autorisierung durchführt.

Die Erfindung ermöglicht aufgrund der genannten Elektronifizierung des gesamten Verfahrens die Verteilung der notwendigen Zugangsberechtigungen (beispielsweise PIN-Nummern) ohne großen versandtechnischen und produktiven Aufwand. Zudem stellt sie eine moderne, d.h. umweltorientierte und verbraucherfreundliche Lösung bereit, die der hier betroffenen Technologie zu einer größeren Marktdurchdringung verhilft und schnellere Reaktionszeiten für die Anbieter solcher Zugangsberechtigungs-Verteilungsdienste ermöglicht. Das vorgeschlagene Verfahren ist bevorzugt im Internet oder ähnlichen Netzwerken einsetzbar.

Gemäß einer Variante des erfindungsgemäßen Verfahrens übermittelt mindestens ein erster Dienstanbieter eine Anzahl von Guthaben mit zugehörigen Zugangsberechtigungen elektronisch an einen zweiten Dienstanbieter. Der zweite Dienstanbieter speichert die Guthaben und die Zugangsberechtigungen elektronisch zwischen. Fordert der Benutzer, insbesondere elektronisch, ein Guthaben mit einem bestimmten Geldwert von dem zweiten Dienstanbieter an und entrichtet elektronisch und/oder über einen Münz- und/oder Banknotenautomaten und/oder über einen Kredit- und/oder Geldkartenautomaten den Geldwert des Guthabens, ggf. über einen unabhängigen Zahlungsdienst, an den zweiten Dienstanbieter, so übermittelt der zweite Dienstanbieter die zu dem angeforderten Guthaben zugehörige Zugangsberechtigung insbesondere elektronisch oder mittels eines gedruckten Belegs an den Benutzer. Schließlich führt der Benutzer für das angeforderte Guthaben anhand der übermittelten Zugangsberechtigung beim jeweiligen ersten Dienstanbieter eine Autorisierung durch, wodurch das Guthaben ,aktiviert', d.h. abrufbar bzw. belastbar wird.

In einer bevorzugten Ausgestaltung des Verfahrens löscht der wenigstens eine bzw. der zweite Dienstanbieter die Zwischenspeicherung der Zugangsberechtigung nach erfolgreicher Übermittlung der Zugangsberechtigung an den Benutzer, wodurch zum einen diese bestimmte Zugangsberechtigung nicht mehr zur Verfügung steht und somit auch nicht mißbräulich verwendet werden kann. Zum anderen steht dadurch der entsprechende Speicherplatz des Zwischenspeichers für eine etwa neu angeforderte Zugangsberechtigung wieder zur Verfügung.

Die Übermittlung der Zugangsberechtigung von dem wenigstens einen bzw. dem zweiten Dienstanbieter an den Benutzer erfolgt bevorzugt mittels elektronischer Datenübertragung, insbesondere unter vorheriger Anwendung einer Datenverschlüsselung. Dadurch lassen sich die umweltbelastenden Einweg-Karten wirksam vermeiden.

Die erfindungsgemäß ebenfalls vorgeschlagene Vorrichtung zeichnet sich insbesondere dadurch aus, dass Telekommunikationsmittel zur zeitweiligen Herstellung einer Telekommunikationsverbindung mit mindestens einem ersten Dienstanbieter und zur zeitweiligen Übermittlung mindestens eines Guthabens mit zugehöriger Zugangsberechtigung von dem mindestens einen ersten Dienstanbieter, Speichermittel zum Zwischenspeichern des mindestens einen Guthabens mit zugehöriger Zugangsberechtigung, erste Eingabemittel zur Eingabe eines Guthabenbetrages und eines ersten Dienstanbieters durch den Benutzer, zweite Eingabemittel zur Entrichtung des Guthabenbetrages durch den Benutzer, Ausgabemittel zur Ausgabe der Zugangsberechtigung an den Benutzer, beispielsweise ein visuelle Ausgabeeinheit (Display, etc.) oder dergleichen sowie Prozessormittel zur Steuerung der Telekommunikationsmittel, der Speichermittel, der ersten und der zweiten Eingabemittel sowie der Druckermittel vorgesehen sind.

Die Vorrichtung, beispielsweise ein Automat, ermöglicht eine 24-stündige Versorgung der Benutzer mit Prepaid-Karten und kann an üblichen, stark frequentierten Verkaufsstellen, wie Tankstellen, Kioske, Gaststätten oder in öffentlichen Verkehrsmitteln in ähnlicher Weise wie Zigarettenautomaten oder Parkscheinautomaten aufgestellt werden. Aufgrund der ermöglichten Standleitungsverbindung zwischen der Vorrichtung und dem für die Vorrichtung jeweils verantwortlichen zweiten Dienstanbieter sowie die vorgeschlagene Datenverarbeitung ist gewährleistet, dass die Vorrichtung völlig autonom arbeitet, d.h. eigenständig den Nachschub mit Zugangsberechtigungen bewerkstelligt. Durch Ausdrucken eines Belegs wird auch hier vermieden, dass Einweg-Karten in Umlauf gebracht werden müssen.

Bevorzugt weist die Vorrichtung eine Druckeinheit zum Drucken eines die Zugangsberechtigung enthaltenden Belegs auf, was gegenüber einer visuellen Darstellung der PIN den Vorteil hat, dass der Benutzer den Beleg mitnehmen kann und erst an einem sicheren Ort die Zugangsberechtigung notieren oder bereits verwenden kann, dass ohne dass diese von Dritten (z.B. missbräuchlich) eingesehen werden kann. Dabei kann vorteilhaft zusätzlich vorgesehen sein, dass die auf den zunächst ausgegebenen Beleg aufgedruckte Zugangsberechtigung durch eine Schutzfolie oder dergleichen abgedeckt ist und erst an dem sicheren Ort abgezogen werden kann.

Ferner können Mittel zur Rückmeldung von etwa vergebenen Zugangsberechtigungen und/oder von etwa vergebenen Rufnummern an den wenigstens einen Dienstanbieter vorgesehen sein. Eine solche von der Vorrichtung, insbesondere dem Automaten, automatisch generierte Rückmeldung an den wenigstens einen Dienstanbieter dient somit dazu, dem Dienstanbieter mitzuteilen, dass eine oder mehrere der durch den Dienstanbieter bereitgestellten Zugangsberechtigungen bzw. Rufnummern bereits an Benutzer vergeben worden sind. Die Rufnummer des Benutzers kann dabei optional erfasst werden, um beispielsweise zu statistischen Zwecken (Erhebungen, Umfragen, etc.) verwendet zu werden.

Schließlich können bei der erfindungsgemäßen Vorrichtung Mittel zur Zustandsanzeige der Ausgabemittel, insbesondere der Druckeinheit, vorgesehen sein, mittels derer beispielsweise erfasst werden kann, dass eine als Ausgabemedium der Druckeinheit dienende Druckpapierrolle sich dem Ende neigt.

### Kurzbeschreibung der Zeichnungen

Die Erfindung wird nachfolgend anhand von in den Zeichnungen dargestellten Ausführungsbeispielen in größerem Detail erläutert.

Dabei zeigen im Einzelnen:
- Fig. 1: ein Ausführungsbeispiel des erfindungsgemäßen Verfahrens anhand eines Flussdiagramms und
- Fig. 2: einen Zugangsberechtigungs-Vergabeautomaten als bevorzugtes Ausführungsbeispiel der erfindungsgemäßen Vorrichtung anhand eines Blockschaltbildes.

### Ausführliche Beschreibung der Zeichnungen

Im Folgenden ist angenommen, dass zunächst ein erster Dienstanbieter vorgesehen ist, bei dem es sich insbesondere um einen Netzbetreiber eines Telekommunikationsnetzes, beispielsweise eines Mobilfunknetzes, handelt. Dieser wird nachfolgend kurz als "Netzbetreiber" bezeichnet. Zudem ist ein zweiter Dienstanbieter vorgesehen, der nachfolgend kurz als "Dienstanbieter" bezeichnet wird. Es versteht sich, dass die Erfindung nicht auf zwei Dienstanbieter beschränkt ist, sondern auch bei nur einem Dienstanbieter, insbesondere einem Netzbetreiber, anwendbar ist.

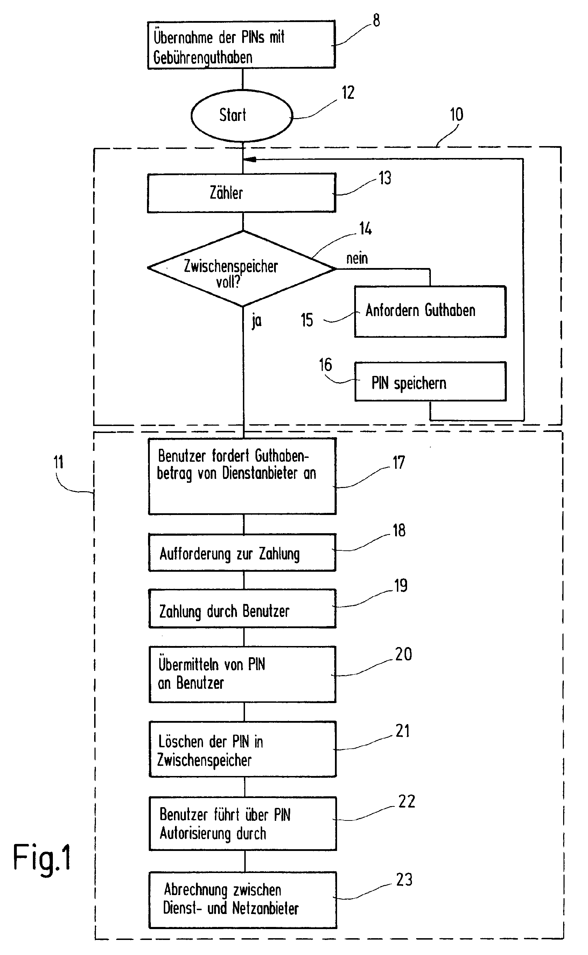

Das in Fig. 1 gezeigte Flussdiagramm unterteilt sich in einen ersten Abschnitt 10 und einen zweiten Abschnitt 11. Der erste Abschnitt 10 umfasst eine Prozedur, die ausschließlich auf Seiten des Dienstanbieters abläuft bzw. durchgeführt wird, wohingegen der Abschnitt 11 eine Interaktion zwischen einem Benutzer und dem Dienstanbieter beinhaltet.

Vor dem "Start" der gesamten Routine ist erforderlich, dass der Dienstanbieter zunächst von dem Netzbetreiber oder alternativ von mehreren Netzbetreibern ein oder mehrere Gebührenguthaben mit zugehörigen Zugangsberechtigungen, z.B. PIN-Nummern (PIN = Personal Identification Number) übernimmt (Schritt 8). Im Falle eines einzigen Dienstanbieters, insbesondere eines Netzbetreibers, kann dieser Schritt entfallen, da der Netzbetreiber bereits im Besitz der Gebührenguthaben und zugehörigen Zugangsberechtigungen ist.

In dem ersten Abschnitt 10 befindet sich nach erfolgtem "Start" 12 der Routine zunächst eine Verzögerungsstufe in Form eines Zählers 13, wodurch zeitweilig geprüft wird 14, ob ein Zwischenspeicher zum Abspeichern von Guthaben und zugehörigen Zugangsberechtigungen voll ist oder nicht. Ist der Zwischenspeicher nicht voll, wird in einer an den Programmanfang zurückspringenden Schleife zunächst entsprechend den freien Speicherstellen ein oder mehrere neue Guthaben angefordert 15 und nach Übermittlung der Guthaben mit zugehörigen Zugangsberechtigungen die jeweiligen Zugangsberechtigungen in den Zwischenspeicher gespeichert 16.

Ist der Zwischenspeicher allerdings voll, geht das Programm in den Abschnitt 11 über. Dort sei zunächst angenommen, dass ein Benutzer einen Guthabenbetrag von dem Dienstanbieter anfordert 17. Danach erhält der Benutzer eine Aufforderung 18 zur Entrichtung des dem Guthaben entsprechenden Geldwertes. Diese Aufforderung 18 kann beispielsweise online oder über E-Mail erfolgen. Nach Erhalt der Aufforderung sei weiter angenommen, dass der Benutzer den Betrag entrichtet 19. Diese Transaktion kann beispielsweise über einen (nicht gezeigten) Kartenleser oder im Falle des Internets über einen dritten Dienstanbieter abgewickelt werden.

Nachdem die Zahlung durch den Benutzer wirksam erfolgt ist, übermittelt 20 der Dienstanbieter die zu dem bestimmten Guthaben gehörige Zugangsberechtigung an den Benutzer. Diese Übermittlung 20 kann beispielsweise im Wege einer chiffrierten E-Mail, via Telefax oder auf dem üblichen Postweg erfolgen. Bevorzugt erfolgt die Übermittlung jedoch online über das Internet oder über eine mobile Telefonverbindung, z.B. durch SMS-Nachricht. Dadurch ist gewährleistet, dass das Guthaben möglichst schnell zur Verfügung steht.

Nachdem die Zugangsberechtigung an den Benutzer übermittelt wurde, wird auf Seiten des Dienstanbieters der entsprechende Eintrag im Zwischenspeicher gelöscht 21. Anhand der Zugangsberechtigung führt der Benutzer noch die erforderliche Autorisierung des Zugriffes auf das Guthaben durch 22, beispielsweise durch Telefonanruf bei dem jeweiligen Netzbetreiber unter Nennung oder sonstiger Übermittlung der Zugangsberechtigung.

Die endgültige Abrechnung 23 erfolgt schließlich zwischen dem Dienstanbieter und dem jeweiligen Netzbetreiber bzw. einem Netzdienstanbieter, der nicht Inhaber eines proprietären Netzes ist.

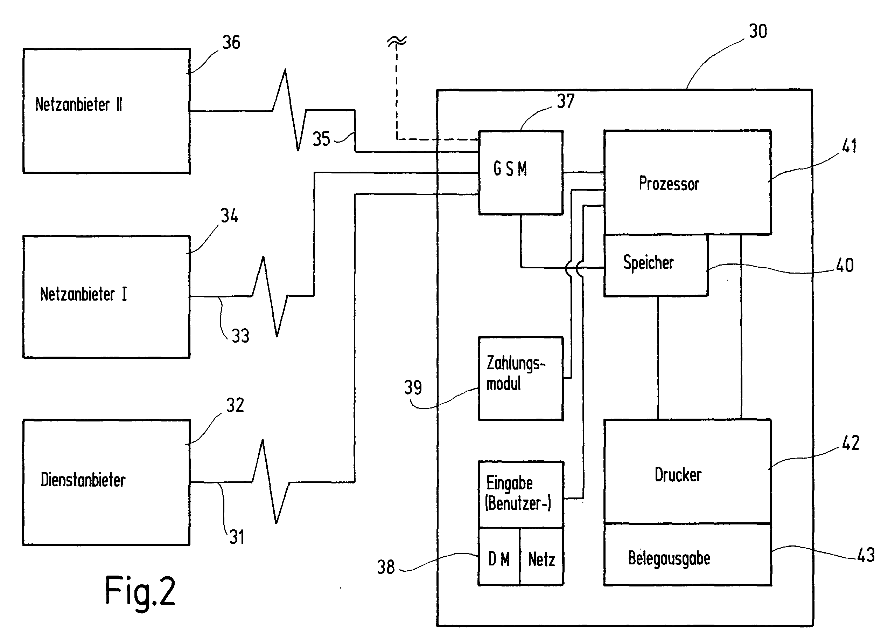

Fig. 2 zeigt in schematischer Blockdarstellung einen Druckautomat 30 zur Herstellung von Guthabenkarten für vorausbezahlbare geschäftliche Transaktionen oder Dienstleistungen. Der Automat 30 ist über eine erste Telekommunikationsleitung 31, z.B. eine Funkleitung oder Festnetzleitung, mit einem Dienstanbieter 32 verbunden. Über eine zweite Telekommunikationsleitung 33 ist der Automat 30 in dem vorliegenden Beispiel zudem mit einem ersten Netzanbieter bzw. Netzbetreiber 34 verbunden. Die zweite Telekommunikationsleitung 33 ist allerdings nur optional vorgesehen. Entsprechend können zusätzliche Leitungen mit weiteren Netzanbietern vorliegen, von denen stellvertretend eine Telekommunikationsleitung 35 zu einem zweiten Netzanbieter 36 gezeigt ist. Es versteht sich daher, dass die Telekommunikationsleitungen 33 bzw. 35 und die Telekommunikationsleitung 31 bei nur einem Dienstanbieter identisch sind.

Der Automat 30 weist am Eingang der genannten Telekommunikationsverbindungen 31, 33, 35, usw. in dem vorliegenden Beispiel ein GSM-Modul auf, das im Wesentlichen zum Aufbau und Abbau von Telekommunikationsverbindungen über die genannten Leitungen 31, 33, 35, usw. dient. Das GSM-Modul 37 beinhaltet beispielsweise ein Protokoll zum Aufbau von Telekommunikationsverbindungen nach dem GSM (Global System for Mobile Telecommunications) -Standard oder einem entsprechenden Standard.

Der Automat 30 weist zudem ein Eingabemodul 38 auf, das zur benutzerseitigen Eingabe eines gewünschten Guthabenbetrags und eines bestimmten Netzbetreibers dient. Das Eingabemodul 38 kann beispielsweise ein übliches Eingabenpult, ein komfortableres Benutzerterminal oder nur ein Zahlenfeld darstellen. Zur Entrichtung des dem jeweiligen Guthaben entsprechenden Geldbetrages dient ferner ein Zahlungsmodul 39, das Einführschlitze für Geldmünzen oder -scheine oder zusätzlich einen Kreditkartenleser beinhaltet.

Die in dem Automaten 30 zur Verfügung stehenden Guthaben(-konten) zusammen mit den entsprechenden Zugangsberechtigungen sind in einem Speicher 40 zwischengespeichert. Der Speicher 40 und sämtliche übrigen Funktionskomponenten des Automaten 30 werden von einem Prozessor 41 angesteuert. Der Prozessor 41 steuert insbesondere ein Druckermodul 42 an, das ein seitens eines Benutzers etwa angefordertes Guthaben bzw. dessen Zugangsberechtigung auf einer Guthabenkarte oder bevorzugt auf einem einfachen Belegzettel druckt, der dann an einem Belegausgabemodul 43 an den Benutzer ausgebenen wird.

Durch die Zahlung mittels Bargeld, d.h. Münzgeld oder Banknoten, oder über elektronische Zahlungsmittel erhält der Benutzer die Möglichkeit, sich durch Auswahl und Aktivierung der angebotenen Gebührenguthaben eine Karte ausdrucken zu lassen, die die erforderliche Zugangsberechtigung, z.B. Autorisierungsnummer (sogenannter PIN-Code) aufgedruckt enthält. Zusätzlich enthält die Karte die für die Aktivierung erfoderlichen Angaben wie Netzbetreiber bzw. Netzdienstanbieter, Guthaben, Telefon-Hotline usw.

Eine Versiegelung der auf der Karte aufgedruckten Zugangsberechtigung ist hier nicht erforderlich, da die Bedienung des Automaten 30 durch den Benutzer des jeweiligen Guthabens selbst erfolgt und daher mit der Eingabe der Zugangsberechtigung einer etwaigen EC-Barabhebung oder dergleichen verglichen werden kann.

Alternativ kann allerdings dennoch eine Versiegelung der Zugangsberechtigung durch Auftragung eines Rubbelfeldes, einer Schutzfolie oder dergleichen vorgesehen sein, wobei das Rubbelfeld bzw. die Schutzfolie nach dem Drucken der Zugangsberechtigung mittels des Druckermoduls 42 aufgebracht wird.

Die in dem Automaten 30 vorhandenen Zugangsberechtigungen werden in Nummernblöcken in dem Speicher 40 zwischengespeichert und über die genannten Telekommunikationsleitungen 31, 33, 35, usw. wieder erneuert bzw. aufgefüllt.

Hinsichtlich des Verfahrensablaufes bei dem beschriebenen Automaten 30 fordert der Benutzer über das Eingabemodul 38 zunächst seinen gewünschten Guthabenbetrag unter Angabe des Netzbetreibers an. Nach Aufforderung zur Zahlung des entsprechenden Betrags, zahlt der Benutzer entweder per Münz-, Schein- oder Kartenzahlung. Durch eine wirksam erfolgte Zahlung wird automatisch der Druck der gewünschten Karte ausgelöst und aus dem vorhandenen Rufnummernblock eine zu der Karte gehörende Zugangsberechtigung aus dem Nummernblock des jeweiligen Netzbetreibers ausgedruckt. Nach erfolgtem Druck wird diese Zugangsberechtigung automatisch im Nummernblock gelöscht. Zusätzlich kann eine kurze Verfahrensanleitung zur Aktivierung des Guthabens auf die Karte aufgedruckt werden.

Die abgerufenen bzw. an einem beschriebenen Automaten ausgegebenen Guthaben werden schließlich zwischen den jeweiligen Netzbetreibern bzw. Netzdienstanbietern und der für die genannte Dienstleistung bzw. den beschriebenen Automaten verantwortlichen Firma (Dienstanbieter) abgerechnet.

Das beschriebene Verfahren sowie die Vorrichtung lassen sich neben den genannten Dienstleistungen auch bei geschäftlichen Transaktionen, beispielsweise im Internet, einsetzen. Auch dort werden zunehmend vorauszahlbare Guthabenkonten verwendet, da diese als Zahlungsmittel derzeit den höchsten Sicherheitsstandard bieten.

## Patentansprüche

1. Verfahren zur Handhabung von vorausbezahlbaren geschäftlichen Transaktionen oder Dienstleistungen, insbesondere von Telekommunikationsdiensten, bei dem Kosten oder Gebühren durch wenigstens einen Dienstanbieter im Voraus erhoben werden und ein Benutzer gegen Entrichtung der Kosten bzw. Gebühren eine Autorisierung in Form einer Zugangsberechtigung erhält, die den Benutzer berechtigt, die im Voraus entrichteten Transaktionen oder Dienstleistungen auszuführen bzw. abzuverlangen, **gekennzeichnet durch** folgende Schritte:
- der wenigstens eine Dienstanbieter speichert elektronisch (16) die Guthaben und die Zugangsberechtigungen;
- der Benutzer fordert (17) ein Guthaben mit einem bestimmten Geldwert von dem wenigstens einen Dienstanbieter elektronisch an;
- der Benutzer entrichtet elektronisch (19) und/oder über einen Münz- und/oder Banknotenautomaten und/oder über einen Kredit- und/oder Geldkartenautomaten den Geldwert des Guthabens, ggf. über einen unabhängigen Zahlungsdienst, an den wenigstens einen Dienstanbieter;
- der wenigstens eine Dienstanbieter übermittelt elektronisch (20) die zu dem angeforderten Guthaben zugehörige Zugangsberechtigung an den Benutzer; und
- der Benutzer führt (22) für das angeforderte Guthaben anhand der übermittelten Zugangsberechtigung bei dem wenigstens einen Dienstanbieter eine Autorisierung **durch**.

2. Verfahren nach Anspruch 1, **gekennzeichnet durch** folgende Schritte:
- mindestens ein erster Dienstanbieter übermittelt elektronisch (15) eine Anzahl von Guthaben mit zugehörigen Zugangsberechtigungen an einen zweiten Dienstanbieter;
- der zweite Dienstanbieter speichert elektronisch (16) die Guthaben und die Zugangsberechtigungen;
- der Benutzer fordert (17) ein Guthaben mit einem bestimmten Geldwert von dem zweiten Dienstanbieter elektronisch an;
- der Benutzer entrichtet elektronisch (19) und/oder über einen Münz- und/oder Banknotenautomaten und/oder über einen Kredit- und/oder Geldkartenautomaten den Geldwert des Guthabens, ggf. über einen unabhängigen Zahlungsdienst, an den zweiten Dienstanbieter;
- der zweite Dienstanbieter übermittelt elektronisch (20) die zu dem angeforderten Guthaben zugehörige Zugangsberechtigung an den Benutzer; und
- der Benutzer führt (22) für das angeforderte Guthaben anhand der übermittelten Zugangsberechtigung bei dem mindestens einen ersten Dienstanbieter eine Autorisierung **durch**.

3. Verfahren nach Anspruch 1 oder 2, **dadurch gekennzeichnet, dass** der wenigstens eine bzw. der zweite Dienstanbieter die Zwischenspeicherung der Zugangsberechtigung nach erfolgreicher Übermittlung der Zugangsberechtigung an den Benutzer löscht (21).

4. Verfahren nach einem der Ansprüche 1 bis 3, **dadurch gekennzeichnet, dass** die Übermittlung der Zugangsberechtigung von dem wenigstens einen bzw. dem zweiten Dienstanbieter an den Benutzer mittels elektronischer Datenübertragung, insbesondere unter vorheriger Anwendung einer Datenverschlüsselung, erfolgt.

5. Verfahren nach einem der vorhergehenden Ansprüche, **dadurch gekennzeichnet, dass** der wenigstens eine bzw. der zweite Dienstanbieter den Benutzer zur Entrichtung des Geldwertes auffordert (18).

6. Verfahren nach einem der Ansprüche 2 bis 5, **dadurch gekennzeichnet, dass** der zweite Dienstanbieter die von dem mindestens einen ersten Dienstanbieter übermittelten Zugangsberechtigungen in Form eines Nummernblocks und einer Referenzierung der Zugangsberechtigungen mit den jeweils zugehörigen Guthabenbeträgen abspeichert.

7. Verfahren nach einem der Ansprüche 2 bis 6, **dadurch gekennzeichnet, dass** auf Seiten des zweiten Dienstanbieters kontinuierlich oder zeitweilig geprüft wird, ob der Zwischenspeicher eine Mindestanzahl an Guthaben mit zugehörigen Zugangsberechtigungen enthält oder ob der Zwischenspeicher mit Guthaben ganz gefüllt ist, und falls dies nicht der Fall ist, der zweite Dienstanbieter bei mindestens einem ersten Dienstanbieter mindestens ein neues Guthaben mit zugehöriger Zugangsberechtigung anfordert.

8. Verfahren nach Anspruch 7, **dadurch gekennzeichnet, dass** auf Seiten des zweiten Dienstanbieters geprüft wird, ob eine Mindestanzahl an Guthaben mindestens eines ersten Dienstanbieters unterschritten wird, und falls dies der Fall ist, der zweite Dienstanbieter von dem betreffenden ersten Dienstanbieter mindestens ein neues Guthaben mit zugehöriger Zugangsberechtigung anfordert.

9. Verfahren nach einem der Ansprüche 2 bis 8, **dadurch gekennzeichnet, dass** der zweite Dienstanbieter das zu einer übermittelten Zugangsberechtigung zugehörige Guthaben mit dem jeweiligen ersten Dienstanbieter abrechnet.

10. Vorrichtung, insbesondere Automat, zur Handhabung von vorausbezahlbaren geschäftlichen Transaktionen oder Dienstleistungen, insbesondere von Telekommunikationsdiensten, bei dem Kosten oder Gebühren durch wenigstens einen Dienstanbieter im Voraus erhoben werden und ein Benutzer gegen Entrichtung der Kosten bzw. Gebühren eine Autorisierung in Form einer Zugangsberechtigung erhält, die den Benutzer berechtigt, die im Voraus entrichteten Transaktionen oder Dienstleistungen auszuführen bzw. abzuverlangen, **gekennzeichnet durch**
- Telekommunikationsmittel (37) zur zeitweiligen Herstellung einer Telekommunikationsverbindung mit mindestens einem Dienstanbieter und zur zeitweiligen Übermittlung mindestens eines Guthabens mit zugehöriger Zugangsberechtigung von dem mindestens einen Dienstanbieter;
- Speichermittel (40) zum Zwischenspeichern des mindestens einen Guthabens mit zugehöriger Zugangsberechtigung;
- erste Eingabemittel (38) zur Eingabe eines Guthabenbetrages und des wenigstens einen Dienstanbieters **durch** den Benutzer;
- zweite Eingabemittel (39) zur Entrichtung des Guthabenbetrages **durch** den Benutzer;
- Ausgabemittel (42) zur Ausgabe der Zugangsberechtigung an den Benutzer;
- Prozessormittel (41) zur Steuerung der Telekommunikationsmittel, der Speichermittel, der ersten und der zweiten Eingabemittel sowie der Ausgabemittel.

11. Vorrichtung nach Anspruch 10, **dadurch gekennzeichnet, dass** als Ausgabemittel (42) zur Ausgabe der Zugangsberechtigung an den Benutzer eine Druckeinheit zum Drucken eines die Zugangsberechtigung enthaltenden Belegs vorgesehen ist.

12. Vorrichtung nach Anspruch 11, **gekennzeichnet durch** insbesondere bei der Druckeinheit (42) angeordnete Mittel zum Aufbringen einer Schutzfolie oder zum Auftragen eines Rubbelfeldes auf dem bedruckten Beleg wenigstens im Bereich der gedruckten Zugangsberechtigung.

13. Vorrichtung nach einem der Ansprüche 10 bis 12, **dadurch gekennzeichnet, dass** die Zugangsberechtigungen in den Speichermitteln (40) in Form von z.B. Nummernblöcken gespeichert sind.

14. Vorrichtung nach einem der Ansprüche 10 bis 13, **dadurch gekennzeichnet, dass** die Zugangsberechtigungen in den Speichermitteln (40) mit den jeweils entsprechenden Guthaben korreliert sind.

15. Vorrichtung nach einem der Ansprüche 10 bis 14, **dadurch gekennzeichnet, dass** Mittel zur Rückmeldung von etwa vergebenen Zugangsberechtigungen und/oder von etwa vergebenen Rufnummern an den wenigstens einen Dienstanbieter vorgesehen sind.

16. Vorrichtung nach einem der Ansprüche 10 bis 15, **dadurch gekennzeichnet, dass** Mittel zur Zustandsanzeige der Ausgabemittel (42), insbesondere der Druckeinheit, vorgesehen sind.
